Europäisches Patentamt

European Patent Office

Office européen des brevets

(19)

(11) Veröffentlichungsnummer: **0 183 066**
**B1**

(12) **EUROPÄISCHE PATENTSCHRIFT**

(45) Veröffentlichungstag der Patentschrift:
18.01.89

(21) Anmeldenummer: 85113682.0

(22) Anmeldetag: 28.10.85

(51) Int. Cl.⁴: **F 01 N 3/02**

(54) **Abgaspartikelfilter für Brennkraftmaschinen.**

(30) Priorität: 30.11.84 CH 5718/84

(43) Veröffentlichungstag der Anmeldung:
04.06.86 Patentblatt 86/23

(45) Bekanntmachung des Hinweises auf die Patenterteilung:
18.01.89 Patentblatt 89/3

(84) Benannte Vertragsstaaten:
CH DE FR GB IT LI

(56) Entgegenhaltungen:
GB-A- 2 007 529
US-A- 4 264 344
US-A- 4 419 113

(73) Patentinhaber: BBC Brown Boveri AG, Haselstrasse,
CH-5401 Baden (CH)

(72) Erfinder: Mayer, Andreas, Fhorhölzlistrasse 14b,
CH-5443 Niederrohrdorf (CH)

ACTORUM AG

# Beschreibung

Die vorliegende Erfindung betrifft einen Abgaspartikelfilter für Brennkraftmaschinen, im wesentlichen bestehend aus einem Aussenfilterteil und einem Zentralfilterteil.

Die üblichen homogen aufgebauten Abgaspartikelfilter brauchen eine feine Porosität, damit der gesamte zu erzielende Abscheidegrad genügend gross ausfällt.

Wegen der feinen Porosität und der geringen Regenerationswahrscheinlichkeit sind Filterbelegungen über längere Zeit nicht zu umgehen. Damit nun der von der Filterbelegung hervorgerufene Druckabfall in akzeptablen Grenzen bleibt, wird eine grosse Filteroberfläche vorgesehen. Diese ergibt unvermeidlich eine grosse Filtermasse und, da man bei feiner Porosität mit nahezu vollständigem Wärmeaustausch rechnen muss, eine grosse Zeitkonstante. Ist bei aufgeladenen Verbrennungsmotoren ein hochdruckseitig plazierter Abgaspartikelfilter vorgsehen, so verstreichen nach einem Kaltstart in der Regel 10 – 20 sec., bis sich der Ladedruck aufgebaut hat.

Zwar könnte diesem Nachteil durch Verringerung des Filtervolumens entgegengewirkt werden, allein führt diese Massnahme zu einer unakzeptablen raschen Filterbelegung, die dann einen Gegendruckanstieg nach sich ziehen würde. Die Vergrösserung der Porosität bringt auch nicht die angestrebte Verbesserung, denn durch diese Massnahme wird einerseits der Abscheidegrad herabgesetzt und andererseits muss hinsichtlich der Wärmespeicherung mit einer ungenügenden Abhilfe gerechnet werden.

In diesem Zusammenhang ist aus US-A-264 344 ein Sammelfilter bekannt geworden, der aus einem Aussenfilterteil und einem Zentralfilterteil besteht. Dabei muss der Filter periodisch einer Wartung im Sinne einer Auswechslung der verstopften Filterteile unterzogen werden. Die Abgaspartikelfilterung geschieht bestimmungsgemäss vorerst im Aussenfilterteil. Steigt während des Betriebes wegen der dort zunehmenden Filterbelegung der Gegendruck an, so tritt eine Klappe in Aktion, welche den Zentralfilterteil freigibt. diese Klappenbestätigung ist an sich eine Notvorkehrung, um den aus der Verstopfung des Aussenfilterteils entstandenen Gegendruck abzusenken. Die Nachteile einer solchen Lösung ist schlussendlich die beschränkte Betriebsautonomie eines solchen Filters, denn bei fehlender Selbstregenerierung wird sich auch der Zentralfilterteil bald verstopfen und eine Wartung benötigen.

Hiergegen ist bei aufgeladenen Verbrennungsmotoren bekannt geworden, über einen bestimmten Leistungsbereich des Motors einen Teil der Abgase durch einen Bypass direkt vor den Lader zu leiten. Tritt der Bypass während der Beschleunigungsphase in Funktion, so ist die Russerzeugung während dieser durch grosse Last gekennzeichneten Periode zwar höher als beim üblichen Betrieb, gesamthaft werden die gesetzlichen Grenzwerte – trotz eines nicht filtrierten Anteils – aber nicht überschritten, denn ein PKW fährt im üblichen Betrieb nur wenige Prozente der Zeit im Beschleunigungsbetrieb. Gegen diese Lösung spricht die Möglichkeit, dass das System missbräuchlich auf Bypass blockiert und so die gesetzgeberische Absicht unterlaufen werden könnte. Des weiteren müssten bei Ausfall der Bypass-Steuerung entsprechende Sicherheitsvorkehrungen eingreifen.

Hier will die Erfindung Abhilfe schaffen. Der Erfindung, wie sie in den Ansprüchen gekennzeichnet ist, liegt die Aufgabe zugrunde, bei einem Abgaspartikelfilter der eingangs genannten Art während des ganzen Betriebes eine gezielte Filtrierung der Abgase zu erreichen. Aufgabe der Erfindung ist es auch, die Wärmesenkeigenschaft des Abgaspartikelfilters möglichst aufzuheben, damit der nachgeschaltete Lader rasch ansprechen kann. Darüber hinaus ist es Aufgabe der Erfindung, das Abbrennen des ausgefilterten Russes, im Sinne einer dauernden Regenerierung des Abgaspartikelfilters, zu ermöglichen.

Die mit der Erfindung erzielbaren Vorteile sind vor allem darin zu sehen, dass die Abgasströmung, indem sie, dem Weg des geringsten Widerstandes folgend, vorerst durch den im ausgesparten Abgaspartikelfilterkern vorzugsweise abströmungsseitig plazierten Zentralfilterteil strömt, der gegenüber dem Aussenfilterteil – bedingt durch grössere Filterporosität und kleinere Masse – einen kleineren Abscheidegrad aufweist. Dadurch verlieren hier die Abgase wenig Temperatur, d.h., die Wärmesenkeigenschaft des Abgaspartikelfilters wird soweit aufgehoben, so dass ein nachgeschalteter Lader rasch ansprechen wird. Da die Abscheidung der Russpartikeln vorerst primär im Zentralfilterteil stattfindet, wird sich hierin – trotz seines geringeren Abscheidegrades – rasch eine starke Ablagerung ergeben, wodurch der Widerstand in dem der Beschleunigungsphase folgenden Betrieb sich demjenigen des Aussenfilterteils angleichen wird. Dieser bietet sodann die Kapazität, über eine längere Periode ohne Regeneration Russpartikeln zu filtrieren. Wegen des im Abgasrohrquerschnitt herrschenden Temperaturprofils erreicht man im Zentralfilterteil in kürzester Zeit die Regenerationstemperatur; das Abbrennen der Russpartikeln setzt hier sodann bevorzugt ein. Dadurch, dass das Volumen des Zentralfilterteils gering ist, ist dessen volle Regeneration selbst dann möglich, wenn die Regenerationsbedingung nur kurze Zeit andauert. Die Regeneration wird sich durch den exothermen Prozess dann auf den Gesamtfilter ausdehnen.

Ein weiterer Vorteil der Erfindung ergibt sich aus der Möglichkeit heraus, Aussenfilterteil und Zentralfilterteil entweder nach gleicher Filterart (Zellen- oder Schaumstoffilter) oder als Kombination der besagten Filterarten auszulegen.

Die Erfindung eignet sich selbstverständlich auch für unaufgeladene Brennkraftmaschinen. Bei aufgeladenen Brennkraftmaschinen handelt es sich um Aufladung durch mechanische Lader, Abgasturbolader oder Druckwellenlader.

In der Zeichnung sind Ausführungsbeispiele der Erfindung schematisch dargestellt. Es zeigt:

Fig. 1 Abgaspartikelfilter mit parabelförmiger Kernaussparung,

Fig. 2 Abgaspartikelfilter mit zylinderförmiger Kernaussparung und

Fig. 3 Abgaspartikelfilter mit Zuströmungsrohr.

Alle für das unmittelbare Verständnis der Erfindung nicht erforderlichen Elemente sind fortgelassen. Die Strömungsrichtung des Arbeitsmediums ist mit Pfeilen bezeichnet. In den Figuren sind gleiche Elemente mit gleichen Bezugszeichen versehen.

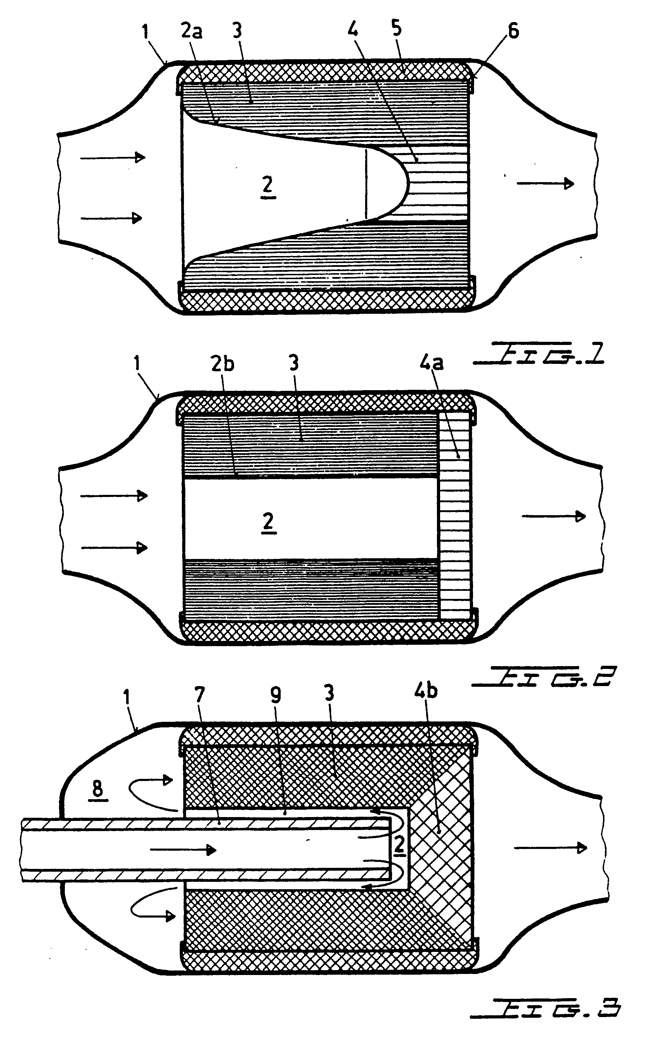

Fig. 1 zeigt vereinfacht den Aufbau eines Abgaspartikelfilters 1. Der hier gezeigte aktive Abgaspartikelfilter 1 hat die Form eines Zylinders und besteht aus einem Aussenfilterteil 3 und einem Zentralfilterteil 4. Eine Isolationsschicht 5 umhüllt den Aussenfilterteil 3 und sorgt dafür, dass seine Abkühlung bei Nichtbeaufschlagung verzögert wird, beispielsweise in 5 Minuten ca. 10 °C. Grundsätzlich soll der Isolationsschicht 5 grösste Aufmerksamkeit geschenkt werden, denn die Leistungen eines nachgeschalteten Laders hängen nach einem Halt wesentlich davon ab, wie hoch während dieser Zeitspanne die Temperaturabsenkung war. Darüberhinaus sorgt eine gute Isolationsschicht 5 dafür, dass die Regenerationstemperatur wesentlich länger erhalten bleibt und bei einem nachfolgenden Regenerationsschub die benötigte Temperatur sich schneller einstellen kann. Nicht zuletzt erfüllt die Isolationsschicht 5 die Aufgabe, die benachbarten Elemente des Abgaspartikelfilters 1 vor Wärmeeinstrahlungen abzuschirmen. Ein Blech 6 schützt die Isolationsschicht 5 vor Wirkungen aus der Abgasströmung. Der ausgesparte Kern 2 des Abgaspartikelfilters 1 erfasst sowohl den Aussenfilterteil 3 als auch den Zentralfilterteil 4 und hat zur besseren Kanalisierung des Abgasstromes die Form einer Parabel 2a. Dadurch wird die Abgasströmung gezielt zum Zentralfilterteil 4 geleitet. Dieser weist gegenüber dem Aussenfilterteil 3 – unabhängig, ob der Aufbau der Filter dem Zellen- oder Schaumstoffprinzip entspricht – eine grössere Porosität auf, wie die unterschiedliche Schraffur hilfsweise andeuten will. Bei Inbetriebnahme oder nach einer Regenerationsperiode folgt die Strömung dem Weg des geringsten Widerstandes, d.h., der grössere Teil des Abgasstromes wird vorerst durch den Zentralfilterteil 4 strömen. Die grössere Porosität hierin bewirkt, dass der Wärmeaustausch nicht vollständig ist; die Aufwärmung des Filtermaterials hinkt also der Abgastemperatur nach. Natürlich wird auch die geringere Masse des Zentralfilterteils 4 weniger Wärme speichern können, d.h., die Zeitkonstante dieses Filterteils ist somit vom geringeren Wert. Da der Abgaspartikelfilter 1 an sich eine Wärmesenke ist, wirken sich die beiden erläuterten Effekte demzufolge positiv aus, insbesondere für einen nachgeschalteten Lader.

Es ist naheliegend, dass der Filterungsgrad des Zentralfilterteils 4 anfänglich und nach jeder Regenerationsphase – wegen der hier vorgesehenen grösseren Porosität – nicht 100% ist. Dies wird, aus den oben erläuterten Überlegungen, auch nicht angestrebt. Indessen kann davon ausgegangen werden, dass der hauptsächlich beim Beschleunigungsvorgang stattfindende partielle Russausstoss von sehr kurzer Dauer sein wird, denn der Zentralfilterteil 4, in dem primär die Russabscheidung stattfindet, wird bald belegt sein, so dass sich der Abgasstrom in dem der Beschleunigungsphase folgenden Betrieb, wegen des im Zentralfilterteil 4 zunehmenden Widerstandes, den Weg über den grösseren, noch nicht beschlagenen Aussenfilterteil 3 suchen wird. Dieser bietet sodann die Kapazität, für eine lange Periode ohne Regeneration Russpartikeln abzuscheiden.

Erreicht man Regenerationstemperatur, so wird der Zentralfilterteil 4 in kurzer Zeit erwärmt, worauf die dort abgelagerten Russpartikeln zu brennen beginnen. Der Zentralfilterteil 4 wird wieder voll durchlässig. Da sein Volumen gering ist, ist die volle Regeneration auch dann möglich, wenn die Regenerationsbedingung nur kurze Zeit andauert.

Die Entzündung der filtrierten Abgaspartikeln setzt bei einer Temperatur von 500 – 550 °C ein, sofern eine Sauerstoffkonzentration von 3 – 6% zur Verfügung steht.

Die Wahrscheinlichkeit dafür, dass der Zentralfilterteil 4 sauber wird, ist somit viel grösser als die Regeneration des Aussenfilterteils 3.

Allgemein ist hier zu sagen, dass die Regeneration dem Massenwirkungsgesetz nach Arrhenius folgt.

Der gesamte auf den Zyklus bezogene Abscheidegrad entspricht den vorgeschriebenen Normen, da die Zeitanteile mit geschwächter Abscheidung über den Zentralfilterteil 4 gering sind. Fordert man zum Beispiel, dass bei regeneriertem Zustand ⅔ der Abgasmenge durch den Zentralfilterteil 4 strömen soll und reduziert man seine Masse auf 10% des Aussenfilterteils 3, so ist eine starke Verringerung des Durchströmwiderstandes bzw. eine starke Erhöhung der Porosität in der Grössenordnung Faktor 20 erforderlich, d.h., die mittlere Porengrösse des Zentralfilterteils 4 bewegt sich dann um 0,1 mm. Selbstverständlich wird die Porengrösse dem jeweiligen konkreten Fall optimal angepasst.

Aussenfilterteil 3 und Zentralfilterteil 4 können aus einem Guss hergestellt werden. Hier bietet sich als praktische Herstellungsart die Extrudiertechnik an. Es ist auch denkbar, die Filterteile einzeln herzustellen und anschliessend dicht miteinander zusammenzufügen. Die Filter selbst werden vorwiegend nach dem Zellen- oder Schaumstoffprinzip hergestellt.

Aussenfilterteil 3 und Zentralfilterteil 4 können aus derselben Filterart bestehen oder untereinander einer Kombination bekannter Filterarten entsprechen. Bei unterschiedlicher Filterart ist nicht notwendigerweise deren Porengrösse von Bedeutung, sondern als Mass muss hier vielmehr der tatsächliche Abscheidegrad zwischen den einzelnen Filterteilen zugrundegelegt werden.

Zellenfilter mit unterschiedlicher Porosität sind nur in Parallelschaltung möglich.

Schaumstoffilter haben demgegenüber den Vorteil, dass auch in monolithischer Bauweise Partien unterschiedlicher Porosität hintereinander geschaltet werden können und so die Möglichkeit geschaffen wird, den Einzelfall optimal zu erfassen.

Wird für den Aussenfilter 3 die Zellenfilterart gewählt, so ist es wichtig, dass entlang der Kurve der Parabel 2a das charakteristische Labyrinthprinzip des Zellenfilters nicht verlorengeht. Es ist des weiteren vorstellbar, dass im Zentralraum eines keramischen Aussenfilterteils 3 ein katalytisierter Wire-Mesh-Strumpf eingesetzt werden kann, der durchaus die angestrebten Verhältnisse hinsichtlich Abscheidegrades und Druckverlustes positiv zu beeinflussen vermag.

Fig. 2 zeigt eine weitere Ausführung des Abgaspartikelfilters 1. Der Kern 2 ist von zylindrischer Form 2b. Der Abschluss des Aussenfilterteils 3 wird auch hier von einem Zentralfilterteil 4a gebildet, dessen Form die einer über den ganzen Umfang des Aussenfilterteils 3 sich erstreckenden Scheibe ist, deren Dicke von Fall zu Fall und in Abhängigkeit zur gewählten Filterart variiert werden kann. Grundsätzlich gelten auch hier, hinsichtlich Abscheidegrades, Druckverlusten und Temperaturabsenkung, die unter Fig. 1 aufgeführten Ausführungen.

Die lichte Weite des Kernes 2 ist variabel, beispielsweise könnte sie ⅓ des Durchmessers des Aussenfilterteils 3 betragen.

Die Herstellung dieses Abgaspartikelfilters 1 gestaltet sich offensichtlich einfacher; demgegenüber erscheint die Zuströmung der Abgase nicht optimal zu sein.

Fig. 3 zeigt eine weitere Ausführung des Abgaspartikelfilters 1. Hier wird eine Verbesserung in der Zuströmung der Abgase angestrebt, indem diese durch ein Rohr 7 direkt vor dem Zentralfilterteil 4b geführt werden. Dort beaufschlagen die Abgase den trapezförmigen Zentralfilterteil 4b, bis der durch die fortschreitende Belegung durch Russpartikeln bedingte Gegendruck so gross wird, dass die Abgase über den Spalt 9 in die Kammer 8 zurückweichen. Von dort aus können sie dann den Aussenfilterteil 3 durchströmen.

Dieser Abgaspartikelfilter 1 weist eine monolithische Bauweise auf, so dass Aussenfilterteil 3 und Zentralfilterteil 4b nur durch die unterschiedliche Filterporosität gekennzeichnet sind. Die hier gegenüber den vorangegangenen Figuren unterschiedlich gewählte Schraffur will lediglich aussagen, dass bei monolithischer Bauweise des Abgaspartikelfilters 1 aus Herstellungsgründen vernünftigerweise nur die Schaumstoffilterart zum Einsatz gelangen kann.

## Patentansprüche

1. Abgaspartikelfilter für Brennkraftmaschinen, im wesentlichen bestehend aus einem Aussenfilterteil (3) und einem Zentralfilterteil (4, 4a, 4b), dadurch gekennzeichnet, dass der Zentralfilterteil (4, 4a, 4b) gegenüber dem Aussenfilterteil (3) eine grössere Filterporosität und eine kleinere Masse hat, wobei der Abgaspartikelfilter (1) anströmungsseitig im Kern (2) eine zum Zentralfilterteil (4, 4a, 4b) strömungseinleitende Ausnehmung (2a, 2b) aufweist.

2. Abgaspartikelfilter nach Anspruch 1, dadurch gekennzeichnet, dass der Zentralfilterteil (4, 4a, 4b) am abströmungsseitigen Ende des Aussenfilterteils (3) plaziert ist.

3. Abgaspartikelfilter nach Anspruch 1, dadurch gekennzeichnet, dass die Masse des Zentralfilterteils (4, 4a, 4b) 10 – 20% derjenigen des Aussenfilterteils (3) ist.

4. Abgaspartikelfilter nach Anspruch 1, dadurch gekennzeichnet, dass Aussenfilterteil (3) und Zentralfilterteil (4) im Kern (2) parabelförmig (2a) ausgenommen sind.

5. Abgaspartikelfilter nach Anspruch 1, dadurch gekennzeichnet, dass der Kern (2) des Aussenfilterteils (3) zylinderförmig (2b) ist.

6. Abgaspartikelfilter nach Anspruch 1, dadurch gekennzeichnet, dass im Kern (2) des Aussenfilterteils (3) ein Rohr (7) eingeführt ist.

7. Abgaspartikelfilter nach Anspruch 1, dadurch gekennzeichnet, dass Aussenfilterteil (3) und Zentralfilterteil (4, 4a, 4b) nach dem Zellenfilter- oder Schaumstoffilterprinzip oder als Kombination dieser Filterarten aufgebaut sind.

## Claims

1. Exhaust gas particle filter for internal combustion engines, which sonsists essentially of an outer filter part (3) and a central filter part (4, 4a, 4b), characterised in that the central filter part (4, 4a, 4b) has an increased filter porosity and a smaller mass relative to the outer filter part (3), the exhaust gas particle filter (1) having in the core (2), on the side facing the flow, a recess (2a, 2b) which leads flow to the central filter part (4, 4a, 4b).

2. Exhaust gas particle filter according to claim 1, characterised in that the central filter part (4, 4a, 4b) is placed at the downstream end of the outer filter part (3).

3. Exhaust gas particle filter according to claim 1, characterised in that the mass of the central filter part (4, 4a, 4b) is 10 – 20% of that of the outer filter part (3).

4. Exhaust gas particle filter according to claim 1, characterised in that the outer filter part (3) and the central filter part (4) are recessed in the core (2) in a parabola shape (2a).

5. Exhaust gas particle filter according to claim 1, characterised in that the core (2) of the outer filter part (3) has a cylindrical shape (2b).

6. Exhaust gas particle filter according to claim 1, characterised in that a tube (7) is introduced into the core (2) of the outer filter part (3).

7. Exhaust gas particle filter according to claim 1, characterised in that the outer filter part (3) and the central filter part (4, 4a, 4b) are constructed on the cell filter or foam material filter principle, or as a combination of these types of filter.

**Revendications**

1. Filtre de particules pour les gaz d'échappement de moteurs à combustion interne, se composant essentiellement d'un élément de filtre extérieur (3) et d'un élément de filtre central (4, 4a, 4b), caractérisé en ce que l'élément de filtre central (4, 4a, 4b) présente par rapport à l'élément de filtre extérieur (3) une plus grande porosité et une plus faible masse, le filtre de particules (1) pour des gaz d'échappement présentant dans le cœur (2), du côté de l'entrée des gaz, un évidement (2a, 2b) menant le courant de gaz vers l'élément de filtre central (4, 4a, 4b).

2. Filtre de particules pour des gaz d'échappement suivant la revendication 1, caractérisé en ce que l'élément de filtre central (4, 4a, 4b) est placé à l'extrémité de l'élément de filtre extérieur (3) située du côté de la sortie du courant de gaz.

3. Filtre de particules pour des gaz d'échappement suivant la revendication 1, caractérisé en ce que la masse de l'élément de filtre central (4, 4a, 4b) représente 10 – 20% de celle de l'élément de filtre extérieur (3).

4. Filtre de particules pour des gaz d'échappement suivant la revendication 1, caractérisé en ce que l'élément de filtre extérieur (3) et l'élément de filtre central (4) sont évidés dans le cœur (2) en forme de parabole (2a).

5. Filtre de particules pour des gaz d'échappement suivant la revendication 1, caractérisé en ce que le cœur (2) de l'élément de filtre extérieur (3) est cylindrique (2b).

6. Filtre de particules pour des gaz d'échappement·suivant la revendication 1, caractérisé en ce qu'un tube (7) est introduit dans le cœur (2) de l'élément de filtre extérieur (3).

7. Filtre de particules pour des gaz d'échappement suivant la revendication 1, caractérisé en ce que l'élément de filtre extérieur (3) et l'élément de filtre central (4, 4a, 4b) sont construits selon le principe du filtre cellulaire, du filtre à mousse ou suivant une combinaison de ces types de filtres.

FIG.1

FIG.2

FIG.3

7